# FASCICULE DE BREVET EUROPEEN

(11) **EP 2 326 798 B1**
(45) Date de publication et mention de la délivrance du brevet: **20.02.2013**
(21) Numéro de dépôt: 09815685.4
(22) Date de dépôt: 24.09.2009
(51) Int. Cl.: E21F 13/02, B60G 17/00, B62D 21/18, B62D 53/00

(54) **DISPOSITIF DE TRANSPORT À CARROSSAGE VARIABLE POUR TUNNEL**
TRANSPORTVORRICHTUNG MIT VARIABLER KRÜMMUNG FÜR EINEN TUNNEL
TRANSPORT DEVICE WITH VARIABLE CAMBER FOR A TUNNEL

(30) Priorité: 25.09.2008 FR 0856468
(43) Date de publication de la demande: 01.06.2011
(73) Titulaire: Metalliance, 71230 Saint Vallier (FR)
(72) Inventeur: COTHENET, Jean-Claude, F-71230 Saint Vallier (FR)
(74) Mandataire: Regimbeau
(86) Numéro de dépôt international: PCT/EP2009/062368
(87) Numéro de publication internationale: WO 2010/034767

(56) Documents cités:
- EP-A- 0 968 905
- CH-A5- 636 054
- US-A- 3 495 672
- US-A- 4 964 480

## Description

La présente invention concerne un dispositif de transport multi-essieux à carrossage variable pour le transport de charges lourdes telles que des bennes, des toupies à béton, des voussoirs, des déblais, etc...dans un tunnel de diamètre réduit, le carrossage variable permettant d'assurer la transition entre un sol plat à l'extérieur du tunnel et le sol concave de l'intérieur du tunnel. Un tel dispositif est particulièrement destiné à la construction de tunnel, notamment dont le diamètre interne est compris entre 8 et 3 mètres, afin d'assurer le transport du matériel jusqu'au font de taille dudit tunnel. Le document EPO968905 décrit un dispositif selon le préambule de la revendication 1.

Dans le domaine de la construction et plus spécifiquement dans le domaine de la construction de tunnel de petites dimensions, typiquement des tunnels dont le diamètre est compris entre 8 et 3 mètres, destinés à des nouvelles applications telles que des conduites hydrauliques, des conduites de gaz, des conduites pour le passage de câbles électriques, etc..., il est bien connu que la concavité importante du sol du tunnel, les rayons de courbure petits et des pentes importantes de ces tunnels ne permettent pas à un véhicule traditionnel de circuler au fond du tunnel.

Il convient alors d'utiliser un véhicule spécifique dont les roues sont inclinées pour se conformer à la courbure du sol.

Toutefois, de tels véhicules ne peuvent pas circuler sur le sol plat à l'extérieur du tunnel.

Afin de remédier à cet inconvénient, on a déjà imaginé des véhicules comportant des actionneurs pour incliner les roues montées sur pivot depuis une première position verticale lorsque les roues prennent appui sur un sol plat jusqu'à une seconde position inclinée lorsque les roues prennent appui sur le sol concave d'un tunnel.

C'est le cas notamment de la demande de brevet japonais JP 9272433 qui décrit un véhicule à stabilisation du carrossage. Ledit véhicule comporte des moyens pour ajuster de manière optimale l'inclinaison, c'est-à-dire le carrossage, de chaque roue.

On entend par carrossage l'angle entre le plan d'une roue et un plan vertical.

Lesdits moyens consistent en un contrôleur d'angle des roues pour contrôler le carrossage et un piston hydraulique d'ajustement de l'angle de la roue pour faire pivoter ladite roue autour d'un axe sensiblement horizontal en fonction de la courbure du sol concave d'un tunnel afin d'ajuster la roue de telle manière que l'angle de contact au sol soit perpendiculaire au sol concave, c'est-à-dire que la roue s'étende dans un plan passant par le centre du cercle confondu avec la concavité du sol au point de contact entre la roue et le sol du tunnel.

Ce type de véhicule bien que permettant de passer d'un sol plat, en dehors du tunnel, au sol concave du tunnel, ne permet pas le transport de matériel dans des tunnels à rayon de courbure petit et à pentes importantes.

De plus, ce type de véhicule, outre le fait que le contrôleur d'angle et le piston hydraulique grève considérablement son coût de fabrication, présente l'inconvénient de ne procurer qu'une variation du carrossage imprécise, cette imprécision étant essentiellement due à l'imprécision de mesure du contrôleur d'angle.

L'un des buts de l'invention est de remédier à tous ces inconvénients en proposant un dispositif de transport de matériel pour tunnel de conception simple, peu onéreuse et permettant le passage d'un sol plat à un sol concave, et inversement, de manière instantanée.

A cet effet et conformément à l'invention, il est proposé un dispositif de transport à carrossage variable pour tunnel conforme aux revendications annexées.

En particulier, il est proposé un dispositif de transport à carrossage variable pour tunnel comportant au moins un châssis globalement longitudinal et deux essieux, un essieu avant et un essieu arrière, portant respectivement des roues. Ledit dispositif est remarquable en ce que chaque essieu comporte des moyens aptes à faire pivoter les roues depuis une première position verticale lorsque les roues prennent appui sur un sol plat jusqu'à une seconde position inclinée lorsque les roues prennent appui sur le sol concave d'un tunnel ou similaire, lesdites roues s'étendant sur la normale du cercle décrit par le tunnel, et inversement, sous l'effet du poids dudit véhicule.

Selon une caractéristique du dispositif suivant l'invention, chaque essieu est constitué d'une poutre centrale globalement horizontale comportant, à chacune de ses extrémités avant et arrière, une paire de bras s'étendant de part et d'autre de ladite poutre centrale, et de préférence inclinés de haut en bas depuis ladite poutre centrale, chaque paire de bras s'étendant dans un plan sensiblement orthogonal au plan sagittal de la poutre centrale, et les extrémités libres de chaque bras portent une liaison pivot apte à recevoir les axes d'un porte roue de sorte que l'axe d'inclinaison des roues soit déporté par rapport à la poutre centrale.

Par ailleurs, chaque porte roue porte avantageusement une paire de roues.

De préférence, chaque porte roue porte une grande roue dite distale s'étendant à l'extérieur et une petite roue dite proximale s'étendant à l'intérieur.

De plus, chaque porte roue comporte des moyens d'entraînement d'au moins une des roues.

Lesdits moyens d'entraînement consistent en au moins un moteur hydraulique.

Selon une autre caractéristique du dispositif suivant l'invention, au moins l'une des extrémités de la poutre centrale de l'essieu est articulée au châssis par une liaison pivot.

De préférence, l'axe de rotation de la liaison pivot s'étend dans le plan sagittal du châssis et est incliné vers l'extrémité libre dudit essieu.

Ledit axe de rotation de la liaison pivot forme un angle compris entre 1 et 6° par rapport à la verticale.

Accessoirement, l'une des extrémités de la poutre centrale de l'essieu comporte des moyens aptes à coopérer avec des moyens complémentaires solidaires de l'une des extrémités d'un second essieu afin d'assurer la solidarisation des deux essieux.

D'autres avantages et caractéristiques ressortiront mieux de la description qui va suivre de plusieurs variantes d'exécution, données à titre d'exemples non limitatifs, du véhicule à carrossage variable conforme à l'invention, à partir des dessins annexés sur lesquels :
- la figure 1 est une vue en perspective du véhicule suivant l'invention équipé d'un poste de pilotage,
- la figure 2 est une vue en perspective du véhicule suivant l'invention sans poste de pilotage,
- la figure 3 est une vue de face d'un essieu du véhicule suivant l'invention en position de roulage dans un tunnel,
- la figure 4 est une vue de côté de l'essieu du véhicule suivant représenté sur la figure 3,
- la figure 5 est une vue de dessus de l'essieu du véhicule suivant l'invention représenté sur la figure 3,
- la figure 6 est une vue en perspective d'un essieu du véhicule suivant l'invention,
- la figure 7 est une vue en perspective du véhicule suivant l'invention en positon de roulage sur un sol nivelé,
- la figure 8 est une vue en perspective du véhicule suivant l'invention en position de roulage dans un tunnel de faible diamètre,

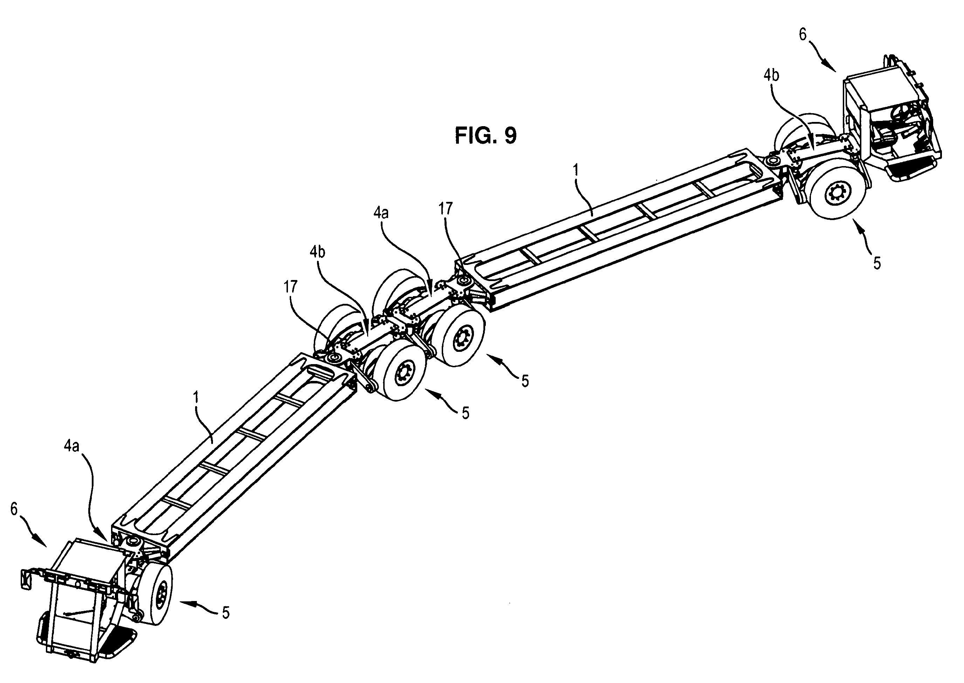

- la figure 9 est une vue en perspective d'une variante d'exécution du véhicule suivant l'invention,

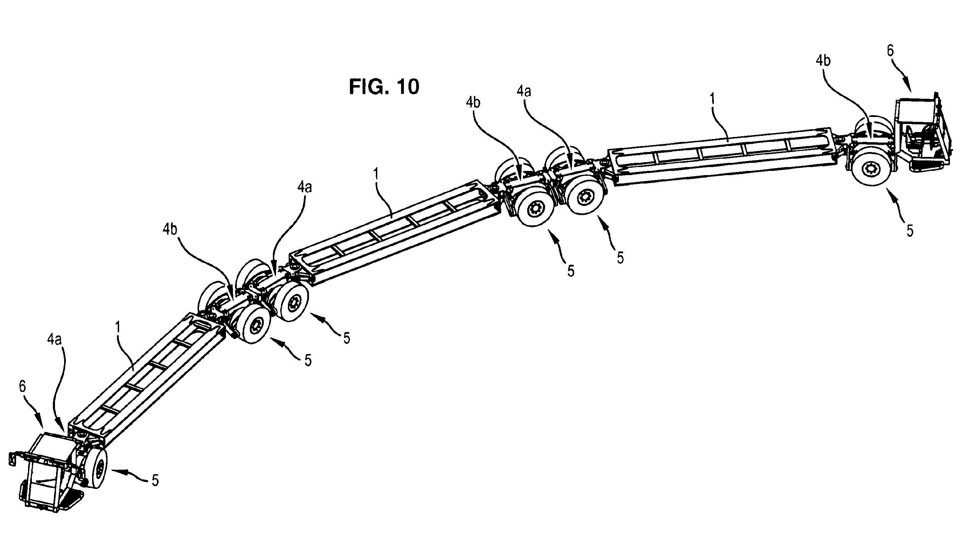

- la figure 10 est une vue en perspective d'une autre variante d'exécution suivant l'invention.

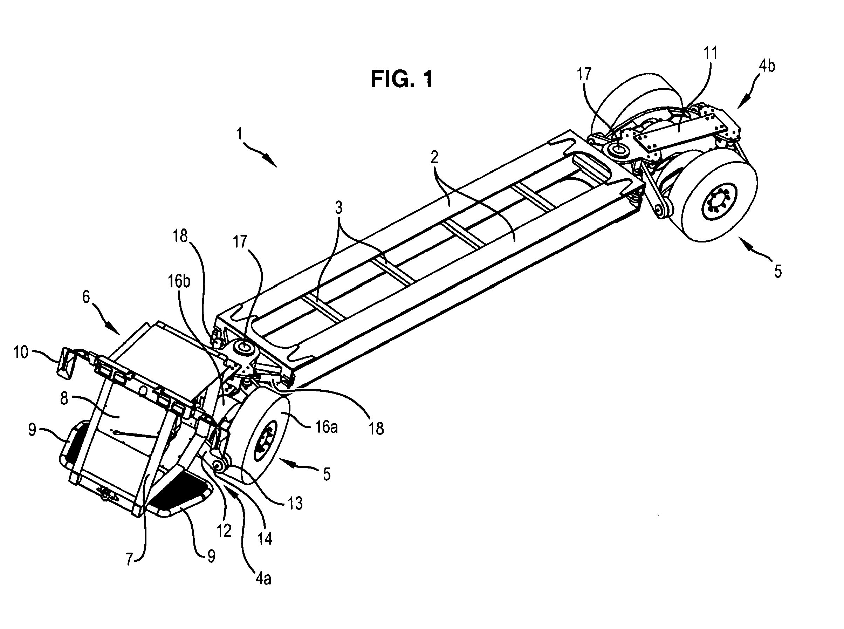

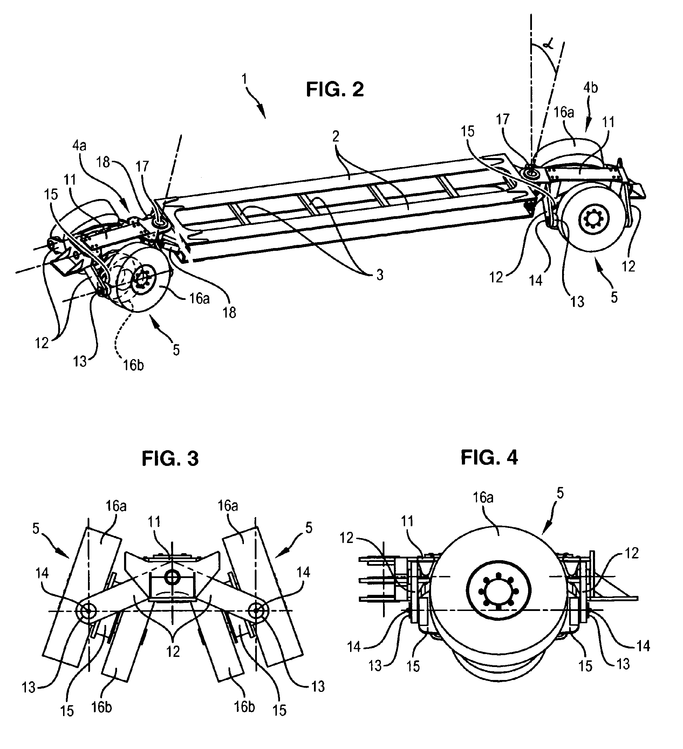

En référence aux figures 1 et 2, le dispositif de transport suivant l'invention comporte un châssis 1 globalement longitudinal, constitué de deux poutres 2 parallèles reliées par des entretoises 3 par exemple, et deux essieux 4a, 4b, un essieu avant 4a et un essieu arrière 4b, portant respectivement des roues 5.

Accessoirement, en référence à la figure 1, l'essieu avant 4a comporte des moyens, non représentés sur la figure, aptes à recevoir une cabine de pilotage 6 comportant classiquement une armature 7, un pare-brise 8, des marchepieds 9, des rétroviseurs 10, etc...

On observera que l'essieu arrière 4b pourra également comporter des moyens aptes à recevoir une telle cabine de pilotage 6.

Par ailleurs, chaque essieu 4a, 4b comporte des moyens aptes à faire pivoter les roues 5 depuis une première position verticale lorsque les roues 5 prennent appui sur un sol plat jusqu'à une seconde position inclinée lorsque lesdites roues 5 prennent appui sur le sol concave d'un tunnel ou similaire, lesdites roues 5 s'étendant sur la normale du cercle décrit par le tunnel, et inversement, sous l'effet du poids dudit véhicule.

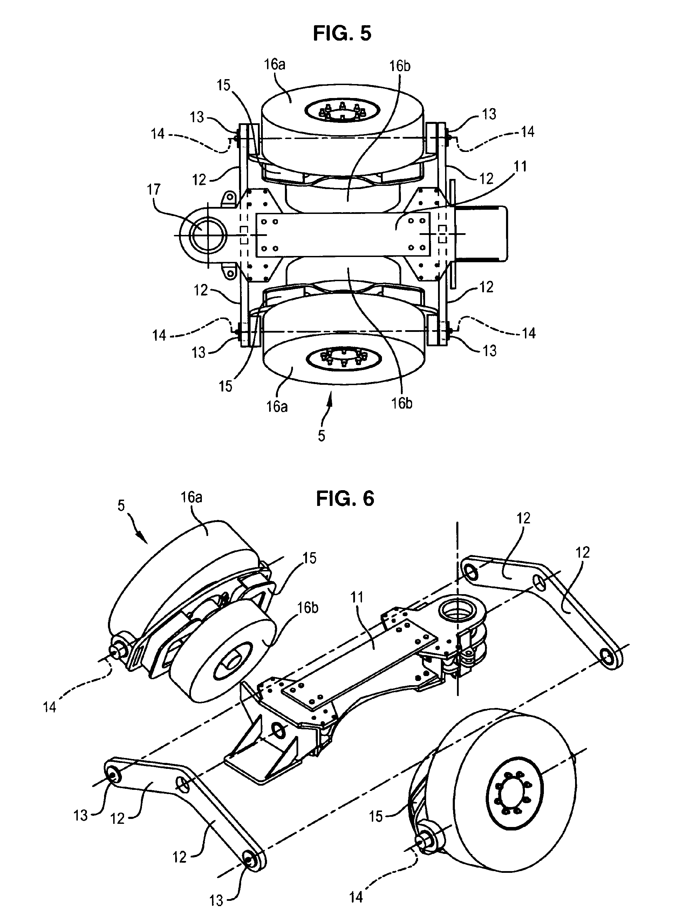

En référence aux figures 1 à 6, chaque essieu 4a, 4b est constitué d'une poutre centrale 11 globalement horizontale comportant, à chacune de ses extrémités avant et arrière, une paire de bras 12 s'étendant de part et d'autre de ladite poutre centrale 11. Les bras 12 sont de préférence inclinés de haut en bas depuis ladite poutre centrale 11, chaque paire de bras 12 pouvant former dans ce cas un V inversé s'étendant dans un plan sensiblement orthogonal au plan sagittal de la poutre centrale 11.

Les extrémités libres de chaque bras 12 portent une liaison pivot 13 apte à recevoir l'axe de rotation 14 d'une fusée à balancier que l'on appellera également porte roue 15, monté libre en rotation autour dudit axe 14. La fonction des bras 12 est donc de déporter l'axe d'inclinaison des roues 5 par rapport à la poutre centrale 11. Chaque porte roue 15 porte de préférence une paire de roues jumelées 16a, 16b, une grande roue 16a dite distale s'étendant à l'extérieur et une petite roue 16b dite proximale s'étendant à l'intérieur. Les axes de rotation respectifs de la petite roue 16b et de la grande roue 16a ne sont pas coaxiaux et s'étendent parallèlement dans un même plan frontal, c'est-à-dire dans un plan orthogonal au plan sagittal de la poutre centrale 11.

Le fait d'utiliser une grande roue 16a distale jumelée à une petite roue 16b proximale au niveau de chaque porte roue 15 permet une inclinaison naturelle des roues en fonction du sol, sous l'effet du poids du véhicule.

Comme indiqué plus haut, les bras 12 ont pour fonction principale de déporter l'axe d'inclinaison des roues par rapport à la poutre centrale 11. Le fait que les bras 12 soient inclinés de haut en bas depuis la poutre centrale 11 des essieux 4a, 4b, permet de déporter la liaison pivot 13 pour la rotation des portes roues 15 à une position décalée par rapport à la poutre centrale 11, en dessous de cette poutre centrale 11 ce qui favorise la rotation des roues 16a, 16b sous l'effet de la gravité. Il pourrait toutefois être également envisagé d'avoir uniquement un déport horizontal par rapport à la poutre centrale 11 (c'est-à-dire parallèle au plan transversal de la poutre centrale 11), l'utilisation d'une paire de roues 16a, 16b permettant à elle seule l'inclinaison des roues sous l'effet de la gravité.

Sur les figures, chaque bras 12 est formé d'une unique poutre droite formant un angle orienté vers le bas par rapport au plan horizontal passant par la poutre centrale 11, ou plus précisément le plan transversal de la poutre central 11. Il peut également être prévu des bras 12 ayant une forme plus complexe, par exemple constitués de deux poutres horizontales (c'est-à-dire parallèle au plan transversal de la poutre centrale 11) couplées respectivement à la poutre centrale 11 et à l'axe de rotation 14, et reliées entre elles par une poutre intermédiaire inclinée vers le bas, formant un angle avec le plan transversal de la poutre central 11 (par exemple une poutre intermédiaire verticale).

Par ailleurs, chaque porte roue 15 comporte des moyens d'entraînement, non représentés sur les figures, d'au moins une des roues 16a, 16b, lesdits moyens d'entraînement consistant dans tout moyen d'entraînement approprié tel que par exemple, un moteur électrique ou un moteur hydraulique alimenté par une pompe hydraulique non représentée sur les figures.

De préférence, les moyens d'entraînement entraînent la grande roue 16a et l'axe de rotation du porte roue 15 passe de préférence par la grande roue 16a afin d'avoir deux fois plus de charge sur la grande roue 16a que sur la petite 16b.

On observera que le fait que les grandes roues 16a se trouvent à l'extérieur du véhicule et, par conséquent, les petites roues 16b à l'intérieur de ce dernier, permet d'avoir un maximum de stabilité dudit véhicule. Par ailleurs, cette construction particulière permet d'utiliser des pneus et des moteurs hydrauliques de taille minimale par rapport à la charge transportée.

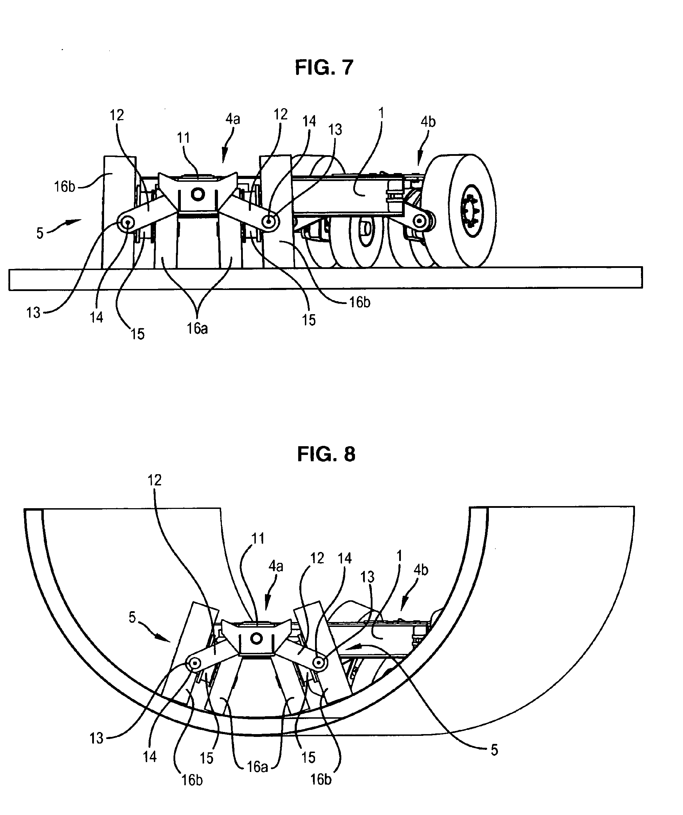

Ainsi, en référence aux figures 7 et 8, le dispositif de transport suivant l'invention comporte un carrossage variable auto-adaptatif permettant une circulation du dispositif dans des tunnels de petits diamètres (figure 8) comme sur sol plat (figure 7) et passer de l'un à l'autre en totale continuité sans intervention d'actionneurs. à cinématique du dispositif suivant l'invention permet à l'ensemble des roues de se positionner sur la normale au cercle décrit par la paroi intérieure du tunnel (figure 8).

Le principal avantage de ce dispositif est qu'il est auto-adaptatif car la rotation autour de la liaison pivot est libre. Le réglage du carrossage est donc toujours optimal puisque les roues suivent exactement le profil du terrain, le conducteur n'a donc en aucun cas besoin de ralentir lors du passage dans le tunnel.

De plus, au moins l'une des extrémités de la poutre centrale de l'essieu avant et/ou arrière 4a, 4b est articulé au châssis 1 par une liaison pivot 17.

L'axe de rotation de la liaison pivot 17 s'étend dans le plan sagittal du châssis 1 et est de préférence incliné vers l'extrémité libre dudit l'essieu 4a ou 4b.

De préférence encore, l'axe de rotation de la liaison pivot 17 forme un angle α compris entre 1 et 6° par rapport à la verticale.

Selon un mode de réalisation préféré de l'invention, en référence aux figures 1 et 2, l'essieu avant 4a et l'essieu arrière 4b sont articulés respectivement à l'une des extrémités du châssis 1 autour d'une liaison pivot 17.

Cette double articulation avant et arrière permet au véhicule de braquer dans un encombrement très court et d'épouser au mieux les courbures du tunnel, et ce quelque soit la solution cinématique utilisée pour que les roues soient inclinables en fonction du poids du véhicule.

Par ailleurs, cette double articulation permet également de réduire considérablement l'effet de corde et l'effet de corne. Ces effets sont pénalisant lorsqu'on utilise un engin de forme parallélépipédique dans un tunnel comportant des rayons de courbures. La double articulation constituée des liaisons pivots 17 avant et arrière permet de suivre au mieux le rayon de courbure du tunnel.

La position de chacune de ces articulations 17 à l'arrière des roues 16a;16b et sa légère inclinaison par rapport à la verticale demande un effort important pour assurer la rotation de l'ensemble essieux lorsque l'on veut changer de direction. Cet effort est donné par deux vérins de direction 18 positionnés de part et d'autre de la liaison pivot 17 et alimentés par une pompe hydraulique non représentée sur les figures. Les extrémités de chaque vérin 18 sont articulées respectivement au châssis 1 et à la poutre centrale 11 de l'essieu 4a, 4b.

En l'absence d'effort, l'essieu revient automatiquement à sa position stable c'est à dire au fond du tunnel.

Cette cinématique de direction permet de maintenir le dispositif de transport au fond du tunnel et d'assurer un quasi-guidage du dispositif.

D'autre part, l'architecture de cette double articulation avant et arrière assure une bonne stabilité de conduite car tout effort extérieur sur les roues 16a, 16b tend à créer un couple servant à ramener la direction du véhicule droite; cela s'explique par le fait que l'articulation ne se trouve pas dans le plan de l'essieu mais en retrait.

Accessoirement, l'une des extrémités de la poutre centrale 11 de l'essieu 4a et/ou 4b comporte des moyens aptes à coopérer avec des moyens complémentaires solidaires de l'une des extrémités d'un second essieu 4a et/ou 4b articulé à un second châssis afin d'assurer la solidarisation des deux essieux et former ainsi un train sur pneu tel que représenté sur les figures 2 et 3. Lesdits moyens coopérant avec des moyens complémentaires pourront consister dans tous moyens de solidarisation bien connus de l'homme du métier.

De cette manière, il est possible de réaliser un train sur pneu modulaire à n modules, chaque module consistant en un châssis, un essieu avant et un essieu arrière, en fonction des besoins du chantier. On notera que les essieux avant et respectivement arrière des modules d'extrémité recevront avantageusement des cabines de pilotage.

On observera le train sur pneu modulaire à n modules pourra être obtenu par l'intermédiaire de tous moyens de solidarisation appropriés entre un châssis et un essieu, deux châssis ou deux essieux, tels que des moyens de solidarisation mécanique, magnétique, électronique ou similaire.

Enfin, il est bien évident que le dispositif suivant l'invention est particulièrement adapté pour assurer la logistique de charges importante telles que des bennes, toupies à béton, voussoirs, déblais, etc, à l'intérieur d'un tunnel de diamètre réduit et d'assurer les transitions pour le passage sur des zones planes et que les exemples que l'on vient de donner ne sont que des illustrations particulières en aucun cas limitatives quant aux domaines d'application de l'invention.

## Revendications

1. Dispositif de transport à carrossage variable pour tunnel comportant au moins un châssis (1) globalement longitudinal et deux essieux (4a,4b), un essieu avant (4a) et un essieu arrière (4b), portant respectivement des roues (5), chaque essieu (4a,4b) comportant des moyens aptes à faire pivoter les roues (5) depuis une première position verticale lorsque les roues (5) prennent appui sur un sol plat jusqu'à une seconde position inclinée lorsque les roues (5) prennent appui sur le sol concave d'un tunnel ou similaire, lesdites roues (5) s'étendant sur la normale du cercle décrit par le tunnel, et inversement, sous l'effet du poids dudit dispositif, **caractérisé en ce que** chaque essieu (4a,4b) est constitué d'une poutre centrale (11) globalement horizontale comportant, à chacune de ses extrémités avant et arrière, une paire de bras (12) s'étendant de part et d'autre de ladite poutre centrale (11), les extrémités libres de chaque bras (12) portant une liaison pivot (13) apte à recevoir les axes (14) d'un porte roue (15), chaque porte roue (15) portant une paire de roues (16a,16b).

2. Dispositif suivant la revendication 1 **caractérisé en ce que** les bras (12) sont prévus pour que la liaison pivot (13) soit déportée vers le bas par rapport à ladite poutre centrale (11).

3. Dispositif suivant l'une quelconque des revendications 1 ou 2 **caractérisé en ce que** les bras (12) s'étendant de part et d'autre de la poutre centrale (11) sont inclinés de haut en bas depuis ladite poutre centrale (11), chaque paire de bras (12) s'étendant dans un plan sensiblement orthogonal au plan sagittal de la poutre centrale (11).

4. Dispositif suivant l'une quelconque des revendications 1 à 3 **caractérisé en ce que** chaque porte roue (15) porte une grande roue (16a) dite distale s'étendant à l'extérieur et une petite roue (16b) dite proximale s'étendant à l'intérieur.

5. Dispositif suivant l'une quelconque des revendications 1 à 4caractérisé en ce chaque porte roue (15) comporte des moyens d'entraînement d'au moins une des roues (16a, 16b).

6. Dispositif suivant la revendication 5 **caractérisé en ce que** les moyens d'entraînement consistent en au moins un moteur hydraulique.

7. Dispositif suivant l'une quelconque des revendications 1 à 6 **caractérisé en ce qu'**au moins l'une des extrémités de la poutre centrale (11) de l'essieu (4a, 4b) est articulé au châssis (1) par une liaison pivot (17).

8. Dispositif suivant la revendication 7 **caractérisé en ce que** l'axe de rotation de la liaison pivot (17) s'étend dans le plan sagittal du châssis (1) et est incliné vers l'extrémité libre dudit essieu (4a, 4b).

9. Dispositif suivant la revendication 8 **caractérisé en ce que** l'axe de rotation de la liaison pivot (17) forme un angle α compris entre 1 et 6° par rapport à la verticale.

10. Dispositif suivant l'une quelconque des revendications 1 à 9 **caractérisé en ce que** l'une des extrémités de la poutre centrale (11) de l'essieu (4a,4b) comporte des moyens aptes à coopérer avec des moyens complémentaires solidaires de l'une des extrémités d'un second essieu (4a,4b) afin d'assurer la solidarisation des deux essieux.

## Claims

1. Transport device with variable camber for a tunnel that comprises at least one globally longitudinal frame (1) and two axles (4a,4b), i.e. a front axle (4a) and a rear axle (4b), respectively carrying wheels (5), each axle (4a,4b) including means capable of pivoting the wheels (5) from a first vertical position when the wheels (5) bear on a flat ground to a second inclined position when the wheels (5) bear on the concave ground of a tunnel or the like, said wheels (5) extending on the normal of the circle defined by the tunnel, and conversely, under the effect of the weight of said device, **characterised in that** each axle (4a,4b) is constituted of a globally horizontal central beam (11) that comprises, at each of the front and rear ends thereof, a pair of arms (12) extending on either side of said central beam (11), the free ends of each arm (12) carrying a pivot link (13) capable of receiving the axes (14) of a wheel carrier (15), each wheel carrier (15) carrying a pair of wheels (16a,16b).

2. Device according to claim 1 **characterised in that** the arms (12) are provided such that the pivot link (13) is moved downwards with respect to said central beam (11).

3. Device according to any of claims 1 or 2 **characterised in that** the arms (12) extending on either side of the central beam (11) are inclined from top to bottom from said central beam (11), each pair of arms (12) extending in a plane substantially orthogonal to the sagittal plane of the central beam (11).

4. Device according to any of claims 1 to 3 **characterised in that** each wheel carrier (15) carries a large wheel (16a), called distal wheel, extending outwards and a small wheel (16b), called proximal wheel, extending inwards.

5. Device according to any of claims 1 to 4 **characterised in that** each wheel carrier (15) comprises means of driving at least one of the wheels (16a, 16b).

6. Device according to claim 5 **characterised in that** the drive means consist of at least one hydraulic motor.

7. Device according to any of claims 1 to 6 **characterised in that** at least one of the ends of the central beam (11) of the axle (4a, 4b) is hinged to the frame (1) by a pivot link (17).

8. Device according to claim 7 **characterised in that** the axis of rotation of the pivot link (17) extends in the sagittal plane of the frame (1) and is inclined towards the free end of said axle (4a, 4b).

9. Device according to claim 8 **characterised in that** the axis of rotation of the pivot link (17) forms an angle α comprised between 1 and 6° with respect to the vertical.

10. Device according to any of claims 1 to 9 **characterised in that** one of the ends of the central beam (11) of the axle (4a,4b) comprises means capable of cooperating with complementary means joined together with one of the ends of a second axle (4a,4b) in order to ensure the joining of the two axles together.

## Patentansprüche

1. Transportvorrichtung mit veränderlichem Radsturz für Tunnel, die wenigstens ein allgemein in Längsrichtung verlaufendes Fahrgestell (1) und zwei Radachsen (4a, 4b) umfasst, eine Vorderachse (4a) und eine Hinterachse (4b), die jeweils Räder (5) tragen, wobei jede Radachse (4a, 4b) Mittel aufweist, die die Räder (5) aus einer ersten vertikalen Position, wenn die Räder (5) auf einem ebenen Boden aufliegen, in eine zweite geneigte Position, wenn die Räder (5) auf dem konkaven Boden eines Tunnels oder ähnlichem aufliegen, zu schwenken vermögen, wobei die Räder (5) sich unter der Einwirkung des Gewichts der Vorrichtung auf der Normalen des durch den Tunnel beschriebenen Kreises erstrecken und umgekehrt,
**dadurch gekennzeichnet, dass** jede Radachse (4a, 4b) von einem allgemein waagerechten Mittelträger (11) gebildet ist, der an jedem vorderen und hinteren Ende ein Armpaar (12) umfasst, das sich beidseits des Mittelträgers (11) erstreckt, wobei die freien Enden eines jeden Arms (12) eine Drehgelenkverbindung (13) tragen, welche die Achsen (14) eines Radträgers (15) aufzunehmen vermag, wobei jeder Radträger (15) ein Räderpaar (16a, 16b) trägt.

2. Vorrichtung nach Anspruch 1, **dadurch gekennzeichnet, dass** die Arme (12) solchermaßen vorgesehen sind, dass die Drehgelenkverbindung (13) bezüglich des Mittelträgers (11) nach unten verlagert wird.

3. Vorrichtung nach einem der Ansprüche 1 oder 2, **dadurch gekennzeichnet, dass** die sich beidseits des Mittelträgers (11) erstreckenden Arme (12) vom Mittelträger (11) aus von oben nach unten geneigt sind, wobei sich jedes Armpaar (12) in einer Ebene erstreckt, die im Wesentlichen orthogonal zur Sagittalebene des Mittelträgers (11) ist.

4. Vorrichtung nach einem der Ansprüche 1 bis 3, **dadurch gekennzeichnet, dass** der Radträger (15) ein als distal bezeichnetes, sich außen erstreckendes großes Rad (16a) und ein als proximal bezeichnetes, sich innen erstreckendes kleines Rad (16b) trägt.

5. Vorrichtung nach einem der Ansprüche 1 bis 4, **dadurch gekennzeichnet, dass** jeder Radträger (15) Mittel zum Antrieb von wenigstens einem der Räder (16a, 16b) aufweist.

6. Vorrichtung nach Anspruch 5, **dadurch gekennzeichnet, dass** die Antriebsmittel aus wenigstens einem Hydraulikmotor bestehen.

7. Vorrichtung nach einem der Ansprüche 1 bis 6, **dadurch gekennzeichnet, dass** wenigstens ein Ende des Mittelträgers (11) der Radachse (4a, 4b) durch eine Drehgelenkverbindung (17) am Fahrgestell (1) gelenkig gelagert ist.

8. Vorrichtung nach Anspruch 7, **dadurch gekennzeichnet, dass** die Drehachse der Drehgelenkverbindung (17) in der Sagittalebene des Fahrgestells (1) verläuft und zum freien Ende der Radachse (4a, 4b) geneigt ist.

9. Vorrichtung nach Anspruch 8, **dadurch gekennzeichnet, dass** die Drehachse der Drehgelenkverbindung (17) einen Winkel α zwischen 1° und 6° bezüglich der Vertikalen bildet.

10. Vorrichtung nach einem der Ansprüche 1 bis 9, **dadurch gekennzeichnet, dass** ein Ende des Mittelträgers (11) der Radachse (4a, 4b) Mittel aufweist, die mit komplementären Mitteln zusammenzuwirken vermögen, die mit einem der Enden einer zweiten Radachse (4a, 4b) fest verbunden sind, um die feste Verbindung der beiden Radachsen zu gewährleisten.
